# EUROPEAN PATENT SPECIFICATION

(11) **EP 1 151 676 B1**
(45) Date of publication and mention of the grant of the patent: **19.11.2008**
(21) Application number: 00201548.5
(22) Date of filing: 01.05.2000
(51) Int. Cl.: A23L 1/164

(54) **Process for manufacturing a cereal bar**
Herstellungsverfahren eines Getreideriegels
Procédé de préparation d'un barre de céréales

(43) Date of publication of application: 07.11.2001
(73) Proprietor: SOCIETE DES PRODUITS NESTLE S.A., 1800 Vevey (CH)
(72) Inventor: Sirohi, Dhan Pal, 1009 Pully (CH); Sievert, Birgit, 1066 Epalinges (CH); Desjardins, Jean-Jacques, 1137 Yens (CH); Geoffroy, Gilbert, 1635 La Tour -De-Treme (CH)
(74) Representative: Cogniat, Eric Jean Marie

(56) References cited:
- EP-A- 0 908 106
- WO-A-00/56171
- US-A- 2 437 150
- US-A- 2 824 806
- US-A- 3 431 112
- US-A- 3 903 308
- US-A- 4 451 488

## Description

The present invention relates to a process for manufacturing a ready-to-eat food bar.

### The state of the art

US4650685 (Persson et al.) discloses a biscuit comprising agglomerated granules of a cooked-extruded base coated with a binder, the base comprising from 40 to 80 parts by weight of cereal flour, up to 20 parts sucrose and from 0.5 to 3 parts of oil or fat, and the binder comprising from 8 to 30 parts by weight of sucrose and/or mixtures of glucose and its polymers.

WO89/04121 (HEINZ SCHAAF OHG) discloses a process for manufacturing cereals by cooking-extruding a mixture of cereal material, vegetable and/or fruits with a partial amount of sugar and milk, cutting the expanded rope of cooked-extruded mixture into pieces having a large surface, spraying an aqueous suspension of sugar and milk onto the just cut, hot and moist pieces, coating the moistened pieces with a remaining part of components in powder form and drying the coated pieces.

WO 00/56171, relevant under Art. 54 (3) EPC, discloses a ready-to-eat food bar consisting of agglomerated particles and/or flulies of one of more cooked-extruded bases mainly comprising amylaceous materials and milk solids which are coated with a binder mainly comprising sugar, milk solids and a loinding agent.

### The objects of the invention

The object of the present invention is to provide a process for manufacturing a ready-to-eat food bar mainly comprising amylaceous material, sugars and possibly milk solids, which is nutritionally valuable and which has a soft texture while retaining the crunchiness of cereal.

### The invention

The present process for manufacturing a ready-to-eat food bar consists of preparing a dry mixture of sugar coated particles of one or more cooked cereal bases mainly comprising amylaceous materials and possibly milk solids, mixing the dry mixture with a binder mainly comprising sugars, milk solids, humectants and fat and forming the mass thus obtained into a bar shape.

It has surprisingly been found that it was possible in this way to provide a food bar which is ready-to-eat, namely ready to be eaten by scrunching it just as it is, which is nutritionally valuable and which has a soft texture while retaining the crunchiness of cereal.

The present invention is as defined by the appended claims.

### General description of the food bar

In the present context, the expression "being nutritionally valuable" may be understood as designating a food bar based on amylaceous materials and sugar especially comprising, in % by weight, from 5.5 to 27.5% of milk solids non fat and from 2.5 to 25% of milk fat and/or vegetable fat, that means a food bar based on amylaceous materials and sugar which is rich in milk protein and calcium.

However, as a whole, beside relatively small amounts of each of residual water, ash, dietary fibers, vitamins and minerals, the present food bar may generally comprise, in % by weight, from about 4 to 12% of protein, from about 50 to 80% of available carbohydrate and from about 2.5 to 25% of fat, for example.

The expression "has a soft texture while retaining the crunchiness of cereal" means that the cereal particles are crunchy within the bar while the binder, namely the continuous phase of the bar is soft.

The expression "particles of cooked cereal bases" covers any possible kind of cereal in piece form such as rolled cereals, gun puffed grains, cereal flakes and/or cooked-extruded cereals, for example.

The term "food bar" means "food product having a massive shape which can be eaten by hand", no limit being set as to the choice of the shape which can be a bar as well as a stick, a ball, a heart, a star, a bear or a banana, for example.

The present food bar may comprise from 5.5 to 27.5% of milk solids non fat, from 2.5 to 25% of milk fat and/or vegetable fat, from 30 to 60% of amylaceous material, from 5 to 30% of sugars, from 2.5 to 15% of humectants and from 1.0 to 7.0% of residual water.

The present food bar may further comprise up to 3% of additional calcium, preferably in form of calcium carbonate or milk calcium, in addition to the calcium already present in the milk solids non fat, for example.

The food bar may also further comprise added vitamins, minerals and/or a source of dietary fibers, for example.

The milk solids may be incorporated into the food bar in two parts, a first part being incorporated into the cooked cereal basis and a second part being incorporated into the binder, or in one part incorporated into the binder, for example.

The milk solids non fat in the cooked-extruded bases may be powdered skimmed milk, for example.

The milk solids in the binder may be milk solids from fresh milk, milk solids from condensed milk and/or milk powder, for example.

The milk fat and/or vegetable fat may be butter oil and/or vegetable fat such as partially hydrogenated sunflower or rape seed fat having a melting point of from 33 to 39°C, for example.

The amylaceous material may be a cereal flour, a starch and/or maltodextrin, for example.

The cereal flour may be wheat, barley, oat, rice and/or corn flour, for example.

The starch may be a native starch from wheat, barley, rice and/or corn, especially high amylose starch, for example.

The sugars may be sucrose, dextrose, fructose, glucose sirup, invert sugar and/or maltose sirup in dry or liquid form, for example.

The possible source of fiber material may be a cereal bran, for example.

Beside sugars and milk solids, the binder comprises humectants and it may further comprise emulsifiers, for example.

The humectants may be glycerol and/or sorbitol, for example.

The emulsifier may be one or more mono- or di-glycerides of edible fatty acids, especially of vegetable origin, or lecithin, for example.

Natural and/or artificial antioxydants may also be added in order to prolonge the shelflife of the bar, such as tocopherols, BHA, BHT and mixtures thereof, for example.

### General description of the process for manufacturing the food bar

As stated above, the present process for manufacturing a ready-to-eat food bar consists of preparing a dry mixture of sugar coated particles of one or more cooked cereal bases mainly comprising amylaceous materials and milk solids, mixing the dry mixture with a binder mainly comprising sugars, milk solids, humectants and fat and forming the mass thus obtained into a bar shape.

### Preparing particles of cooked cereal bases

Particles of cooked cereal bases may be any of those known to the man skilled in the art as rolled cereals, gun puffed grains, cereal flakes and/or cooked-extruded cereals, for example.

Rolled cereals may be prepared by cooking grains (whole or grits) with a liquor comprising sugar, malt, salt and vitamins, partially drying, rolling and flaking them, for example.

Puffed grains may be prepared by puffing whole grains of wheat or rice in a gun or in an oven, for example.

Cereal flakes may be prepared by cooking cereal grits or grains with a liquor, forming pellets out of the cooked mass thus obtained, rolling, toasting and possibly coating them with sugar, for example.

Cooked-extruded cereals are prepared by cooking-extruding-expanding a mixture mainly comprising amylaceous materials and possibly milk solids, thus obtaining a rope of a thermo plastic mass having a porous texture, cutting the rope into pieces and coating them with sugar, for example.

The cooked-extruded-expanded cereals are prepared by cooking-extruding-expanding at 120 to 170°C under 4 MPa - 16 MPa [40 to 160 bar] for 5 to 50 s a mixture comprising, in parts by weight, up to 27.5 parts of milk solids non fat, up to 12.5 parts of milk fat and/or vegetable fat, from 50 to 90 parts of amylaceous material, up to 12 parts of sugars, and added water up to a water content of from 11 to 19% by weight of the mixture, thus obtaining a rope of a thermo plastic mass having a porous texture, cutting the rope into pieces and drying them.

The mixture may be prepared by first mixing together powdery components to obtain a dry mix and then mixing together the dry mix and liquid or fluid components.

This mixing step may be carried out in a first mixing section of a traditional food extruder, especially a twin screw extruder, for example.

Cooking the mixture may then be carried out in subsequent sections of the extruder where the mixture is heated, compressed and sheared so that it forms a cooked thermo plastic mass.

The thermo plastic mass may be extruded by having it pushed by the extruder screw or twin screw through the openings of a die provided for at an end of the extruder.

The die may have one or more circular openings having of from 2 to 5 mm in diameter, for example.

The thermo plastic mass may be expanded by extruding it through the die into an open space at ambiant temperature and at atmospheric pressure, for example.

Water is lost in form of steam escaping the thermoplastic mass during expansion so that the rope thus obtained has a porous texture and may have a water content of from 5 to less than 11%, for example.

Cutting into pieces the thus obtained rope of expanded thermoplastic mass may be carried out by a two or more blade cutter rotating adjacent to the die openings, for example.

Drying the pieces may be carried out on a belt dryer with hot air, for example.

The dried pieces are then coated with a sugar solution and dried again. The coating step may be carried out in a tumbler where a sugar solution may be sprayed onto the tumbling pieces, for example.

The sugar solution may comprise from 50 to 60% sugar, from 3 to 10% dextrose, from 0.5 to 1.5% oil and from 10 to 40%, especially from 25 to 35% water. It may also comprise cocoa powder, sodium chloride and aroma, for example.

The amount of sugar solution to be used may be such that the weight proportion of coating on the coated pieces is from 10 to 40%, preferably from 15 to 25%.

The coated pieces may then be finally dried down to a residual water content of 3% or less, preferably 2% or less.

### Preparing the binder

As a whole, the binder may comprise, in parts by weight, from 10 to 70 parts of sugars, from 5 to 30 parts of humectants, from 5.5 to 27.5 parts of milk solids non fat, from 10 to 35 parts of milk fat and/or vegetable fat, up to 10 parts of cocoa powder, up to 5 parts of emulsifier and added water up to a water content of from 5 to 15%, for example.

The binder may be prepared by mixing together its dry components in powdered form with its fluid components in liquid form.

The possible milk solids may be incorporated into the binder in form of fresh milk, of condensed milk and/or of milk powder, for example.

Water may be added as such, as water contained in condensed milk or as water contained in fresh milk, for example.

Sugar may be added as such and/or as sugar contained in sweetened condensed milk, for example.

A preferred binder comprises condensed sweetened milk, in an amount of from 20 to 45 parts by weight, for example. In this case, the binder may be prepared by mixing the components in a double walled tank while heating to a temperature of from 105 to 117°C, thus concentrating the mixture up to a dry matter content of from 80 to 95%, preferably of from 90 to 92%, and then cooling down to a temperature of from 33 to 80°C, for example.

### Mixing particles and binder

A dry mix of particles may be prepared and mixed with the binder in a flowable state, namely at a temperature such that its fat components is in a liquid state, especially at a temperature of from 33 to 80°C, for example.

Mixing particles and binder may be carried out by means of any gentle, especially continuous mixer which does not damage the cereal particles, such as a screw mixer of the helical spring type with an axial sprinkling nozzle, a coating drum or a paddle mixer, for example.

The dry mix and the binder may be mixed at a rate of about 40 to 70 parts by weight of dry mix and about 60 to 30 parts by weight of binder, while optionally adding thereto additional cereals, fruits having an adequate water activity (Aw) or nuts, for example.

The mass thus obtained preferably has an Aw of from 0.1 to 0.5 (water content of from 1 to 7%), and more preferably an Aw of from 0.1 to 0.3 (water content of from 1 to 3%).

### Shaping the bar

The flowable mass obtained above may be formed into a bar shape by sheeting-cutting, sheeting-moulding, moulding or pressing through an opening and cutting, for example.

The ready-to-eat food bar may then be coated with a sweet coating such as a chocolate coating or a coating reminiscent of white chocolate such as a mixture of a milk powder and fat, for example. The thus coated bar may finally be provided with any decorating usual in the confectionary art, for example.

The ready-to-eat food bar may be conditioned in a packing providing for its protection against humidity, such as a packing made of a film with aluminium foil, or a metallised foil, for example.

The following examples are given as illustration of embodiments of the ready-to-eat food bar and of the process for its manufacture according to the present invention. The parts and percentages are by weight.

### Example 1

For manufacturing a ready-to-eat food bar comprising particles of a cooked-extruded wheat base, a mixture was first prepared which had the following composition, (in parts, except added water):

| | |
|---|---|
| wheat flour | 41 |
| wheat starch | 18 |
| oat flour | 9 |
| wheat bran | 9 |
| calcium carbonate | 0.5 |
| added water, up to a water | |
| content of | 19% |

For preparing the mixture, the powders were first mixed together to obtain a dry mix. The dry mix and added water were then mixed together in the extruder. The mixture obtained in this way was cooked-extruded-expanded with the aid of a BC-45H type CLEXTRAL twin screw extruder having a screw diameter of 55 mm and a total processing length of 800 mm.

Cooking-extruding was carried out at 150°C under 100 bar for 30 s, the two intermeshing screws rotating at 300 rpm. The cooked thermoplastic mass obtained in this way was extruded through a die having eight circular openings 3 mm in diameter.

The thermoplastic mass was extruded into ambiant air and immediately cut with a two blade cutter rotating adjacent to the opening at 2000 rpm.

The particles of cooked-extruded-expanded wheat base obtained in this way expanded after cutting so that they were about 5 mm in diameter. They had a water content of 10.6%.

The particles were then dried with hot air on a belt dryer to a residual water content of 2.9%.

The dried pieces were coated with a sugar solution in a tumbler.

The sugar solution comprised 59% sugar, 10% dextrose, 1% oil and 30% water.

The amount of sugar solution used was such that the weight proportion of coating on the coated pieces was 20%.

The coated particles were then finally dried down to a residual water content of 2%.

A blinder was prepared wich had the following composition (parts) :

| | |
|---|---|
| skim milk powder | 12.5 |
| glucose syrup | 9.4 |
| sorbitol syrup | 7.2 |
| invert sugar | 11.5 |
| condensed sweetened milk (29% | 33.5 |
| water, 43% sugar) | |
| sodium chloride | 0.3 |
| hydrogenated vegetable fat | 13.4 |
| (melting point 39°C) | |
| mixture of vegetable mono- | |
| and diglycerids | 0.6 |
| Glycerine | 6.7 |
| Water | 5.0 |

For preparing the binder, the components were mixed together in a double walled tank while being heated to 114°C until the mixture was concentrated up to a dry matter content of 91%. The binder was then cooled down to a temperature of 75°C.

50 parts of particles of a cooked-extruded wheat base and 50 parts of binder were gently mixed by means of a mixer of the helical spring type.

The mass thus obtained was formed into a bar shape by sheeting down to a thickness of 1 cm and cutting individual bars 3 cm in width and 10 cm in length.

The bars had a water content of 5.3% and an Aw value of 0.35.

The bars had a soft texture while retaining the crunchiness of the cooked-extruded-expanded wheat base. They had an appetizing taste and could be eaten as they were. They were nutritionally valuable, each individual bar representing a complete meal just as it was.

## Claims

1. A process for manufacturing a ready-to-eat food bar, consisting of preparing a dry mixture of particles of one or more cooked cereal bases mainly comprising amylaceous materials and possibly milk solids, mixing the dry mixture with a binder mainly comprising sugars, milk solids, humectants and fat and forming the mass thus obtained into a bar shape; wherein the particles of cooked cereal base are cooked-extruded-expanded cereals prepared by cooking-extruding-expanding at 120 to 170 °C under 4 to 16 MPa (40 to 160 bar) for 5 to 50 s a mixture comprising, in parts by weight, up to 27.5 parts of milk solids non fat, up to 12.5 parts of milk fat and/or vegetable fat, from 50 to 90 parts of amylaceous material, up to 12 parts of sugars, and added water up to a water content of from 11 to 19% by weight of the mixture, thus obtaining a rope of a thermo plastic mass having a porous texture, cutting the rope into pieces and drying them; wherein the dried pieces are then coated with a sugar solution and dried again.

2. A process as claimed in claim 1, in which the sugar solution comprises from 50 to 60% sugar, from 3 to 10% dextrose, from 0.5 to 1.5% oil and from 10 to 40% water.

3. A process as claimed in claim 1, in which the binder comprises, in parts by weight, from 10 to 70 parts of sugars, from 5 to 30 parts of humectants, from 5.5 to 27.5 parts of milk solids non fat, from 10 to 35 parts of milk fat and/or vegetable fat, up to 10 parts of cocoa powder, up to 5 parts of emulsifier and added water up to a water content of from 5 to 15%.

4. A process as claimed in claim 3, in which the possible milk solids are incorporated into the binder in form of fresh milk, of condensed milk and/or of milk powder, and the binder comprises condensed sweetened milk in an amount of from 20 to 45 parts by weight.

5. A process as claimed in claim 3, in which the binder is prepared by mixing the components in a double walled tank while heating to a temperature of from 105 to 117°C, thus concentrating the mixture up to a dry matter content of from 80 to 95% and then cooling down to a temperature of from 33 to 80°C.

## Patentansprüche

1. Verfahren zur Herstellung eines essfertigen Lebensmittelriegels, das besteht in der Herstellung einer Trockenmischung aus Teilchen von einer oder mehreren Grundmassen gekochter Cerealien, die überwiegend stärkehaltige Materialien sowie möglicherweise Milchfeststoffe enthalten, Vermischen der Trockenmischung mit einem Bindemittel, das vorwiegend Zucker, Milchfeststoffe, Feuchthaltemittel und Fett umfasst, und Formen der auf diese Weise erhaltenen Masse in Riegelform, wobei die Teilchen der Grundmasse gekochter Cerealien kochextrudierte-expandierte Cerealien sind, die hergestellt wurden durch Kochextrudieren-Expandieren bei 120 bis 170 °C unter 4 bis 16 MPa (40 bis 160 bar) für 5 bis 50 s einer Mischung, die, in Gewichtsteilen, bis zu 27,5 Teile Nichtfett-Milchfeststoffe, bis zu 12,5 Teile Milchfett und/oder Pflanzenfett, von 50 bis 90 Teile stärkehaltiges Material, bis zu 12 Teile Zucker sowie zugesetztes Wasser bis zu einem Wassergehalt von 11 bis 19 Gew.-% der Mischung umfasst, um auf diese Weise einen Strang einer thermoplastischen Masse mit einer porösen Textur zu erhalten, Schneiden des Strangs in Stücke und deren Trocknen, wobei die getrockneten Stücke danach mit einer Zuckerlösung überzogen und nochmals getrocknet werden.

2. Verfahren nach Anspruch 1, wobei die Zuckerlösung von 5 bis 60% Zucker, von 3 bis 10% Dextrose, von 0,5 bis 1,5% Öl und von 10 bis 40% Wasser umfasst.

3. Verfahren nach Anspruch 1, bei dem das Bindemittel, in Gewichtsteilen, von 10 bis 70 Teile Zucker, von 5 bis 30 Teile Feuchthaltemittel, von 5,5 bis 27,5 Teile Nichtfett-Milchfeststoffe, von 10 bis 35 Teile Milchfett und/oder Pflanzenfett, bis zu 10 Teile Kakaopulver, bis zu 5 Teile Emulgator sowie zugesetztes Wasser bis zu einem Wassergehalt von 5 bis 15% umfasst.

4. Verfahren nach Anspruch 3, bei dem die möglichen Milchfeststoffe in das Bindemittel in Form von Frischmilch, von Kondensmilch und/oder von Milchpulver eingearbeitet werden und wobei das Bindemittel angesüßte Kondensmilch in einer Menge von 20 bis 45 Gew.-Teilen umfasst.

5. Verfahren nach Anspruch 3, bei dem das Bindemittel hergestellt wird durch Vermischen der Bestandteile in einem doppelwandigen Tank unter Erhitzen auf eine Temperatur von 105 bis 117 °C, wodurch die Mischung bis auf einen Trockenmassegehalt von 80 bis 95% konzentriert wird, und dann Abkühlen auf eine Temperatur von 33 bis 80 °C.

## Revendications

1. Procédé pour la préparation d'une barre alimentaire prête à la consommation, consistant en la préparation d'un mélange sec de particules d'une ou plusieurs bases de céréales cuites comprenant principalement des matières amylacées et éventuellement de la matière sèche du lait, le mélange du mélange sec avec un liant comprenant principalement des sucres, de la matière sèche du lait, des agents hydratants et une matière grasse, et la transformation de la masse ainsi obtenue en une barre ; dans lequel les particules de base de céréales cuites sont des céréales cuites-extrudées-expansées préparées par cuisson-extrusion-expansion à une température de 120 à 170°C sous une pression de 4 à 16 MPa (40 à 160 bars) pendant 5 à 50 s, d'un mélange comprenant, en parties en poids, jusqu'à 27,5 parties d'extrait sec dégraissé du lait, jusqu'à 12,5 parties de matière grasse du lait et/ou de matière grasse végétale, 50 à 90 parties de matière amylacée, jusqu'à 12 parties de sucres, et de l'eau ajoutée jusqu'à une teneur en eau de 11 à 19 % en poids du mélange, ce qui permet d'obtenir un cordon d'une masse thermoplastique ayant une texture poreuse, la coupe du cordon en morceaux et leur séchage ; où les morceaux séchés sont ensuite enrobés avec une solution de sucre et sont séchés de nouveau.

2. Procédé suivant la revendication 1, dans lequel la solution de sucre comprend 50 à 60 % de sucre, 3 à 10 % de dextrose, 0,5 à 1,5 % d'huile et 10 à 40 % d'eau.

3. Procédé suivant la revendication 1, dans lequel le liant comprend, en parties en poids, 10 à 70 parties de sucres, 5 à 30 parties d'agents hydratants, 5,5 à 27,5 parties d'extrait sec dégraissé du lait, 10 à 35 parties de matière grasse du lait et/ou de matière grasse végétale, jusqu'à 10 parties de poudre de cacao, jusqu'à 5 parties d'un émulsionnant et de l'eau ajoutée jusqu'à une teneur en eau de 5 à 15 %.

4. Procédé suivant la revendication 3, dans lequel la matière sèche du lait pouvant être utilisée est incorporée au liant sous forme de lait frais, de lait condensé et/ou de lait en poudre, et le liant comprend du lait condensé sucré en une quantité de 20 à 45 parties en poids.

5. Procédé suivant la revendication 3, dans lequel le liant est préparé en mélangeant les constituants dans un réservoir à double paroi avec chauffage simultané à une température de 105 à 117°C, ce qui concentre le mélange jusqu'à une teneur en matière sèche de 80 à 95 %, puis en refroidissant jusqu'à une température de 33 à 80°C.
